Europäisches Patentamt

European Patent Office

Office européen des brevets

(11) Numéro de publication: **0 220 969**
**A1**

(12) **DEMANDE DE BREVET EUROPEEN**

(21) Numéro de dépôt: **86401929.4**

(22) Date de dépôt: **02.09.86**

(51) Int. Cl.⁴: **G 02 B 6/44**

(30) Priorité: **06.09.85 FR 8513245**

(43) Date de publication de la demande:
**06.05.87 Bulletin 87/19**

(84) Etats contractants désignés:
**CH DE GB IT LI SE**

(71) Demandeur: **Valleix, Paul**
**75 rue Olivier de Serres**
**F-75015 Paris (FR)**

(72) Inventeur: **Valleix, Paul**
**75 rue Olivier de Serres**
**F-75015 Paris (FR)**

(74) Mandataire: **Mongrédien, André et al**
**c/o BREVATOME 25, rue de Ponthieu**
**F-75008 Paris (FR)**

(54) **Structure pour connexions optiques.**

㊤ Structure pour connexions optiques.
Elle comprend des supports (2) parallèles et allongés.
Chaque support porte sur une face une rangée de boîtiers de
connexion optique (4) et sur l'autre face, au niveau de chaque
boîtier, des premiers moyens de guidage (50) de fibres
optiques de liaison (34) destinées à relier des boîtiers, et des
seconds moyens de guidage (58) de ces fibres, reliant les
supports et placés en regard des boîtiers de même niveau dans
ces supports, les premiers moyens permettant aux fibres de
liaison de parcourir les supports en longueur et en largeur.
Elle permet d'établir des liaisons à partir des centraux de
télécommunication vers les usagers.

FIG. 2

EP 0 220 969 A1

**Description**

STRUCTURE POUR CONNEXIONS OPTIQUES

La présente invention concerne une structure pour connexions optiques. Elle trouve notamment une application dans les réseaux de télécommunication à fonctions multiples (notamment la fonction de distribution de signaux de télévision), à fibres optiques.

La réalisation d'un réseau de ce genre conduit à une banalisation des fibres optiques d'un câble optique aboutissant à un central de télécommunication, encore appelé "câble d'arrivée", chaque fibre optique de ce câble devant pouvoir servir, indifféremment, aux liaisons de transmission entre centraux, aux liaisons à usage professionnel (liaisons à haut débit et à large bande) et aux liaisons de vidéo-communication. Cette banalisation conduit à trouver une structure autorisant une accessibilité totale c'est-à-dire la liaison entre n'importe quelle fibre du câble et n'importe quel équipement du central, et plus généralement, entre n'importe quelle fibre d'un premier câble optique et n'importe quelle fibre d'un second câble optique (chacun de ces câbles étant un câble d'arrivée ou un câble aboutissant à un équipement), ainsi que la possibilité de créer, de supprimer ou de transférer une liaison relative à une fibre optique, à tout instant, sans altérer les autres fibres optiques.

On connaît déjà une structure appelée "bâti de raccordement", qui est destinée au raccordement de câbles optiques pour certaines liaisons optiques, et qui est par exemple commercialisée par la Société CIT ALCATEL sous la référence BR 10. Cependant, cette structure est inadaptée aux réseaux envisagés plus haut, qui nécessitent une structure ayant de grandes possibilités de brassage des câbles optiques et des fibres optiques. Or, la structure connue manque de souplesse d'emploi. Dans cette structure connue, les possibilités de brassage des câbles qui y aboutissent sont trés limitées et conduisent à des accumulations de ces câbles, et les possibilités de brassage des fibres optiques sont pratiquement inexistantes.

La présente invention a pour but de remédier à ces inconvénients en proposant une structure bien adaptée aux réseaux envisagés plus haut.

De façon précise, la présente invention a pour objet une structure pour connexions optiques, caractérisée en ce qu'elle comprend :
- des supports de forme allongée, sensiblement parallèles, chaque support portant sur une face, d'un côté, une rangée de boîtiers de connexion optique, qui s'étend suivant la longueur du support, chaque boîtier étant pourvu d'une pluralité de moyens de connexion optique destinés à relier des fibres optiques et situés dudit côté, et, sur l'autre face, au niveau de chaque boîtier, des premiers moyens de guidage de fibres optiques de liaison destinées à relier optiquement les moyens de connexion entre eux, et
- des seconds moyens de guidage de ces fibres de liaison, reliant les supports, placés au voisinage de l'autre côté de ceux-ci et en regard des boîtiers de même niveau dans ces supports,
les premiers moyens de guidage étant prévus pour permettre aux fibres de liaison de parcourir les supports sensiblement longitudinalement et transversalement, à partir de boîtiers de ces supports, pour aller jusqu'à des boîtiers de supports différents par l'intermédiaire des seconds moyens de guidage.

De par sa conception, la structure selon l'invention a une grande souplesse d'emploi et de grandes possibilités de brassage des câbles et des fibres optiques. Elle permet en effet, compte tenu de l'utilisation des rangées de boîtier de connexion et desdits premiers moyens de guidage, "d'étaler" dans l'espace le parcours des câbles et des fibres optiques de liaison, en évitant leur accumulation qui est une source d'engorgement.

La structure selon l'invention est également avantageuse car modulaire : il est toujours possible de modifier par adjonction ou retrait, le nombre de supports ainsi que le nombre de boîtiers de connexion dans un support donné.

De préférence, chaque boîtier, étant destiné à l'épanouissement de fibres optiques d'un câble optique aboutissant à ce boîtier, comprend un orifice pour l'entrée du câble et au moins un tambour ayant un rayon qui permet l'enroulement des fibres du câble.

Chaque boîtier peut ne comporter qu'un nombre très limité de tambours, un ou deux tambours au maximum, ce qui est suffisant, plus simple et moins coûteux que les boîtiers utilisés dans les structures BR 10, dans lesquels il existe une réserve unitaire de fibres optiques, chaque boîtier comportant autant de tambours qu'il y a de fibres optiques dans le câble aboutissant à ce boîtier.

De préférence, chaque support comprend en outre sur la face portant les boîtiers et du côté opposé à ceux-ci, une rangée de tambours de réception s'étendant parallèlement à la rangée de boîtiers destinés à recevoir les câbles, certains de ces tambours étant déplaçables parallèlement à la rangée de boîtiers.

Comme on le verra par la suite, l'utilisation des tambours déplaçables est avantageuse par le fait qu'elle permet d'intervenir dans un boîtier de connexion, en cas de rupture de fibres optiques dans ce boîtier, sans perdre une grande longueur du câble aboutissant à ce boîtier.

De préférence également, chaque support comprend en outre des moyens de renvoi des fibres de liaison d'une face à l'autre du support, ces moyens de renvoi étant situés au voisinage des moyens de connexion optique et ayant une courbure compatible avec le diamètre des fibres de liaison.

On remédie ainsi au problème de fragilité des fibres optiques.

En vue d'assurer la protection des fibres optiques passant d'une face à l'autre du support, les moyens de renvoi comportent de préférence des rainures destinées à guider les fibres de liaison lorsqu'elles passent d'une face à l'autre du support.

Dans une réalisation avantageuse de la structure selon l'invention, cette structure comprend en outre au moins un boîtier auxiliaire fixé sur un support, sur ladite autre face de celui-ci et au niveau d'un boîtier de connexion chaque boîtier auxiliaire étant destiné à l'épanouissement de fibres optiques d'un autre câble optique aboutissant à ce boîtier auxiliaire, et comportant un orifice pour l'entrée de l'autre câble, un tambour ayant un rayon qui permet l'enroulement des fibres optiques de l'autre câble, et des ouvertures prévues pour la sortie de ces fibres respectivement en direction du boîtier de connexion et des premiers moyens de guidage correspondant aux autres boîtiers de connexion adjacents audit boîtier de connexion.

Ceci permet de réduire l'affaiblissement des signaux transmis par les fibres optiques de l'autre câble lorsque ces fibres sont connectées à des fibres des boîtiers. En effet, une fibre de l'autre câble peut alors être connectée à une fibre d'un boîtier par un seul moyen de connexion, alors que si l'autre câble était épanoui dans un boîtier, la connexion en question nécessiterait l'utilisation d'une fibre optique de liaison et donc deux moyens de connexions.

De préférence, le support est percé d'une ouverture au voisinage du boîtier auxiliaire, cette ouverture permettant le passage de l'autre câble optique.

Ceci permet de faire aboutir l'autre câble sur la face du support portant les boîtiers de connexion et les câbles aboutissant à ces boîtiers, l'autre câble traversant ensuite l'ouverture pour aboutir au boîtier auxiliaire.

Enfin, dans une réalisation particulière de la structure objet de l'invention, cette structure comprend en outre au moins un moyen de multiplexage en longueur d'onde, ayant une entrée optiquement couplée à un moyen de connexion optique d'un boîtier de connexion et plusieurs sorties destinées à être optiquement couplées à des fibres optiques.

La présente invention sera mieux comprise à la lecture de la description qui suit, d'exemples de réalisation donnés à titre purement indicatif et nullement limitatif, en référence aux dessins annexés sur lesquels :

- la figure 1 est une vue schématique d'un mode de réalisation particulier de la structure objet de l'invention, vu d'un côté,
- la figure 2 est une vue schématique de la structure représentée sur la figure 1, vue de l'autre côté,
- la figure 3 est une vue de dessus schématique de cette structure,
- la figure 4 est une vue schématique d'un boîtier auxiliaire utilisable dans la structure représentée sur les figures 1 à 3,
- la figure 5 est une vue schématique d'un mode de réalisation particulier des boîtiers de connexion optique utilisés dans cette structure,
- la figure 6 montre des moyens de multiplexage en longueur d'onde qui sont utilisables avec ces boîtiers, et
- la figure 7 représente un dispositif permettant de maintenir les câbles optiques aboutissant à ces boîtiers.

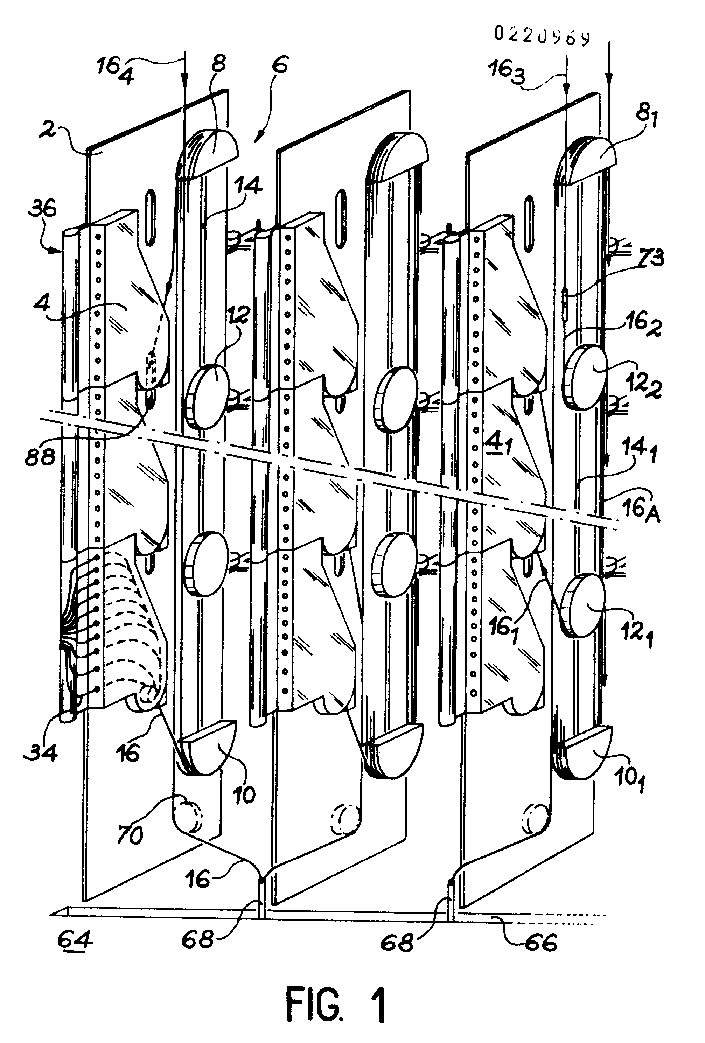

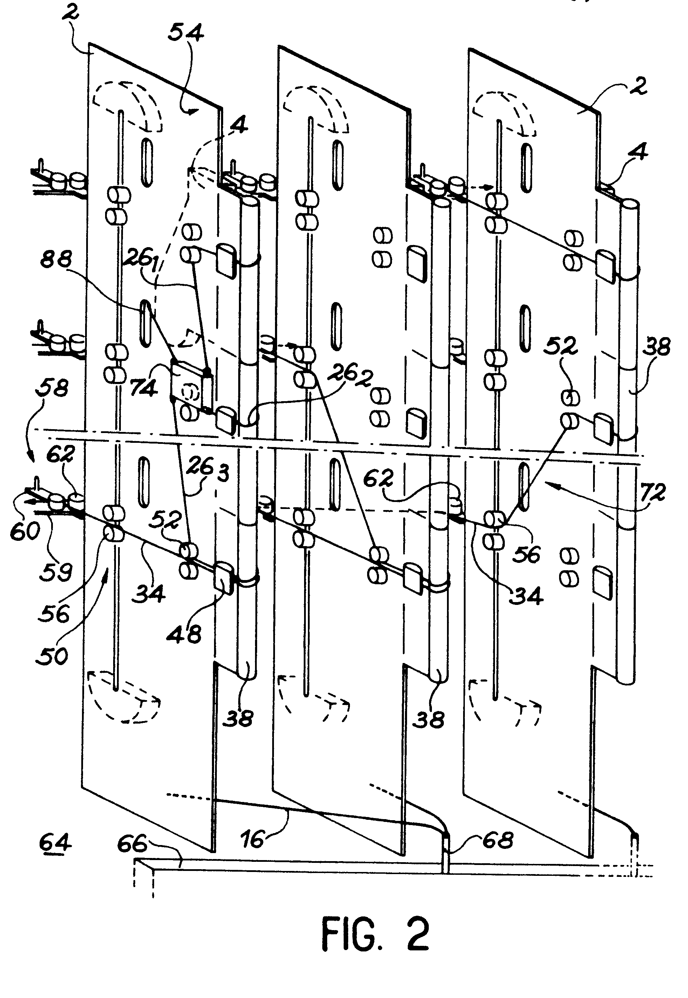

Sur les figures 1 et 2, on a représenté schématiquement un mode de réalisation particulier de la structure objet de l'invention. Cette structure comprend une rangée de supports 2 parallèles. Ces supports sont constitués de plaques de forme allongée qui sont généralement disposées verticalement mais qui pourraient bien entendu être disposées selon tout autre orientation. La disposition verticale de ces plaques encore appelées "fermes" facilite la description de la structure selon l'invention, qui peut alors être faite au moyen de termes tels que "haut", "bas", "gauche" et "droite". En utilisant cette disposition verticale des plaques 2, la figure 1 représente la face avant de la structure vue du côté droit tandis que la figure 2 représente cette face avant vue du côté gauche.

Chacune des plaques 2 est munies de boîtiers, de tambours, de moyen de renvoi et de moyens de guidage dont il sera question par la suite, l'agencement relatif de ces divers éléments étant identique pour chacun des supports.

La face droite de chaque support 2, vue de l'avant de la structure, est munie d'une rangée verticale de boîtiers de connexion optique 4, empilés à l'avant du support 2, et d'une rangée verticale de tambours 6 disposés les uns au-dessus des autres vers l'arrière du support 2, cette rangée de tambours étant délimitée par un tambour supérieur référencé 8 et un tambour inférieur référencé 10. Les boîtiers de connexions 4 sont plus communément appelés "têtes optiques" ou "têtes de câbles". Le tambour supérieur 8 est fixe par rapport à la plaque 2 et disposé au-dessus de la tête optique la plus haute tandis que le tambour inférieur 10 est fixe par rapport à la plaque 2 et disposé au-dessous de la tête optique la plus basse. Les autres tambours référencés 12 sont déplaçables verticalement par rapport à la plaque 2. Pour ce faire, une fente verticale allongée 14 peut être pratiquée dans cette plaque 2, du tambour 8 au tambour 10. chaque tambour mobile 12 étant alors muni d'un système de blocage non représenté, permettant de le maintenir à une position appropriée qui sera précisée par la suite, par rapport à la plaque 2. Le système de blocage comprend par exemple une vis traversant la fente 14 à partir de la face gauche de la plaque 2, vue de l'avant de la structure, pour être vissée dans un trou fileté approprié du tambour 12, la tête de la vis venant alors appuyer contre cette face gauche.

Les différents câbles optiques intervenant dans la structure objet de l'invention sont les câbles simples et les câbles multiples comportant plusieurs câbles simples, chaque câble simple comportant lui-même plusieurs fibres optiques, dix dans l'exemple représenté.

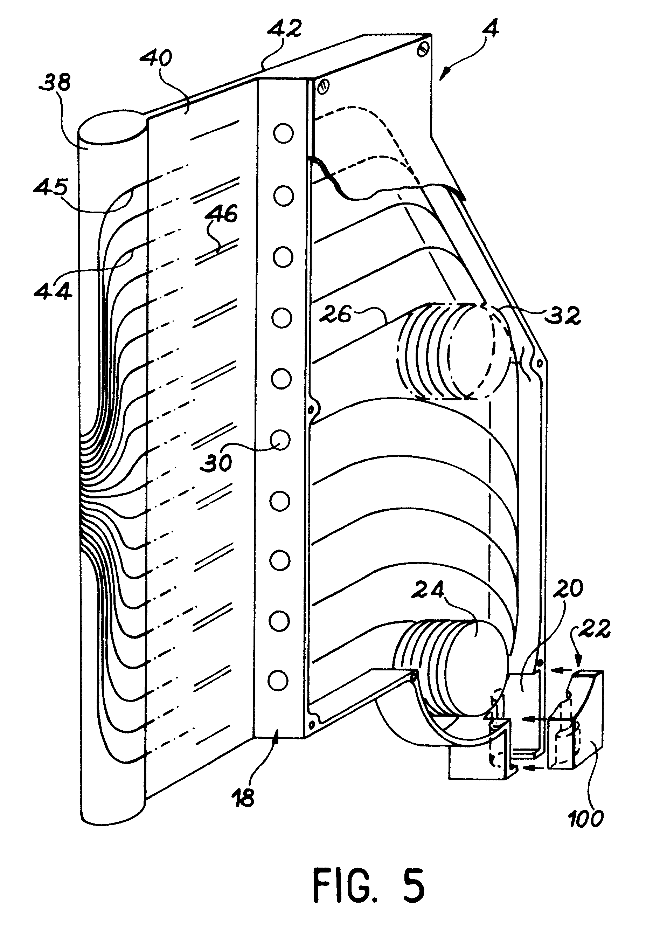

Chaque tête optique 4, qui est destinée à recevoir un câble simple 16 encore appelé "jonc", est constituée d'une boîte de forme allongée, conçue pour que toutes les têtes optiques correspondant à un même support 2 puissent être empilées. Chaque boîte 4 a une face avant 18 (figure 5) qui est de forme allongée et plane, de sorte que les têtes optiques d'un même support, disposées les unes au-dessus des autres, ont leurs faces avant 18 dans un même plan vertical. Chaque tête optique 4 est munie, vers l'arrière de sa partie inférieure, d'un orifice 20 destiné à l'entrée du câble simple 16 dans cette tête qui est en outre munie d'un dispositif 22 permettant la pénétration et le blocage du câble simple. Un tambour 24 est fixé à l'intérieur de la boîte 4 à proximité de l'orifice 20. Lorsque la boîte est fixée sur son support 2, l'axe de ce tambour 24 est horizontal. A l'intérieur de la boîte 4, les dix fibres optiques 26 du câble simple 16 s'épanouissent et sont enroulées sur le tambour 24 qui constitue ainsi une réserve de fibres optiques. Le rayon du tambour 24 est bien entendu adapté à la taille des fibres optiques. En d'autres termes, il est suffisamment important pour éviter toute rupture d'une fibre optique lorsqu'elle est enroulée sur ce tambour.

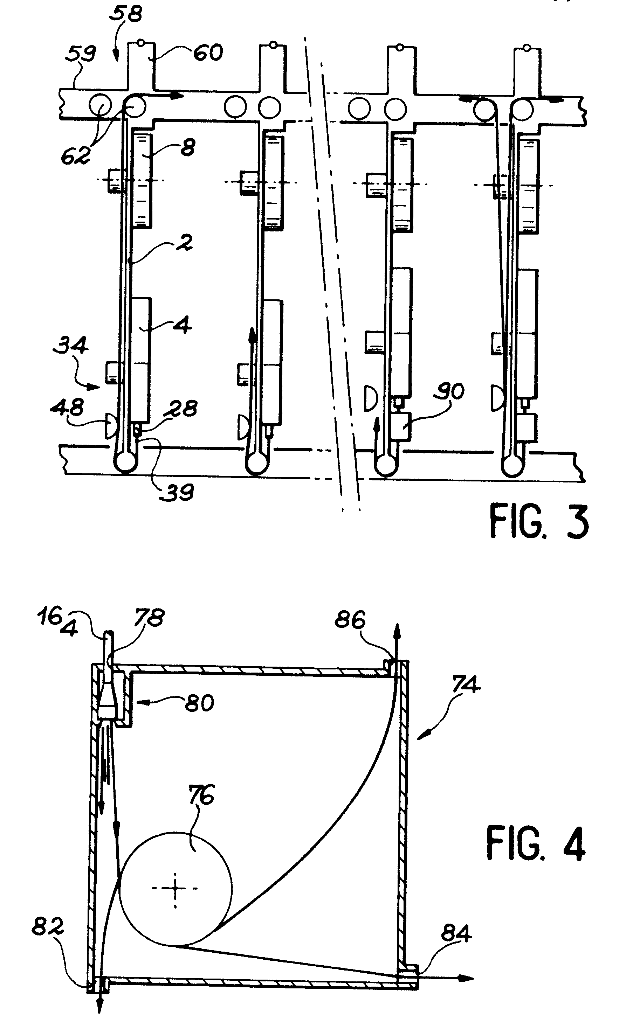

Des connecteurs optiques 28 (figure 3), en nombre égal à celui des fibres du câble 16, dix dans l'exemple donné, sont fixés à l'extérieur de la tête optique 4, contre sa face avant 18 et le long de cette face, ladite face étant pourvue d'une ouverture 30 en regard de chaque connecteur. Après leur enroulement sur le tambour 24, les fibres 26 se déploient dans la tête optique 4 et sont respectivement reliées optiquement aux connecteurs 28 après avoir traversé les ouvertures 30.

Dans une variante de réalisation, la tête optique 4 comporte un tambour intérieur supplémentaire 32 identique au tambour 24 et disposé à la verticale de ce dernier, un certain nombre de fibres optiques du câble 16, cinq dans l'exemple donné, étant alors enroulées sur le tambour 24 et les autres fibres optiques étant enroulées sur l'autre tambour 32.

Dans la structure selon l'invention, des fibres optiques de liaison 34 sont prévues afin d'être raccordées aux fibres 26 par l'intermédiaire des connecteurs 28. Chaque plaque 2 est munie d'un moyen de renvoi 36 des fibres de liaison d'une face à l'autre de cette plaque. Ces moyens de renvoi se présentent sous la forme d'une colonne qui est fixée verticalement à l'avant de la plaque 2, en regard de la rangée de connecteurs, qui est obtenue après superposition des têtes optiques correspondantes. La colonne 36 peut être réalisée par superposition d'éléments 38 cylindriques, par exemple tubulaires, chaque élément ou tube 38 étant fixé à une tête optique 4 déterminée (figure 5), parallèlement à la face avant 18 de celle-ci et par l'intermédiaire d'une plaque plane 40 qui prolonge la face latérale gauche 42, supposée plane, de la tête optique. Le tube 38 est ainsi fixé à la plaque 40 de sorte que les connecteurs correspondants 28 sont en retrait de ce tube qui les protège des utilisateurs de la structure. En outre, le tube 38 est fixé à la plaque 40 de façon que les portions 39 de fibres optiques extérieures à la tête 4 et respectivement reliées aux connecteurs de celle-ci soient sensiblement dans l'axe des connecteurs (figure 3).

Des rainures 44, dont le nombre est supérieur à celui des connecteurs 28 de la tête 4 sont prévues sur le tube 38 et peuvent avoir une profondeur de l'ordre de 3 millimètres. Il y a par exemple deux fois plus de rainures que de connecteurs. Chaque rainure 44 comporte une partie 45 horizontale en regard d'une ouverture 30. Lorsque l'on passe de la face droite à la face gauche de la plaque 2 correspondante, les rainures convergent, à la suite de ces parties 45, vers la partie centrale du tube 38 et présentent enfin des parties horizontales. du côté de la face latérale gauche 42. Les rainures 44 ont pour fonction de guider les fibres optiques telles que les fibres 34, dans leur passage d'une face à l'autre de la plaque 2.

Un pluralité de glissières 46 est prévue sur la plaque 40 (figure 5) en regard des connecteurs de la tête optique. afin de pouvoir fixer des multiplexeurs en longueur d'onde dont il sera question par la suite, respectivement en regard des connecteurs 28.

Ces connecteurs sont protégés des allées et venues des utilisateurs de la structure objet de l'invention étant donné qu'ils sont en retrait des colonnes 36. Celles-ci assurent donc la protection des connecteurs, le maintien des fibres reliées à ces connecteurs dans l'axe de ces derniers et la protection de ces fibres contre les chocs grâce aux rainures courbes dans lesquelles les fibres passent.

Une pièce de guidage 48 (figures 2 et 3) est en outre fixée par exemple par ses extrémités inférieure et supérieure, à la face latérale gauche 42 de chaque tête optique 4, au niveau de la partie centrale du tube 38. Cette pièce 48 présente une forme courbe en regard de la face 42 et a pour fonction de guider les fibres en provenance des connecteurs 28, lorsque ces fibres sortent des rainures 44 pour passer ensuite entre la pièce 48 et la face 42.

Sur la face gauche 54 de chaque plaque 2 (vue de l'avant), sont fixés des premiers moyens de guidage 50 au niveau de chaque tête optique 4. Ces moyens de guidage 50 ont pour fonction de permettre aux fibres optiques, après être passées de la face droite à la face gauche de la plaque 2, d'avoir un parcours dans le sens horizontal ou dans le sens vertical. Ces moyens de guidage 50 sont par exemple constitués de deux pièces cylindriques 52 d'axes horizontaux, fixées l'une au-dessus de l'autre avec un intervalle entre elles, vers l'avant de la plaque 2, en regard de la pièce de guidage 48, et de deux autres pièces 56 identiques aux pièces 52. ayant des axes horizontaux, et fixées sur la face gauche 54 vers l'arrière de la plaque 2 avec ledit intervalle entre elles et de façon qu'une pièce 52 et une pièce 56 aient leurs axes dans un même plan horizontal et que l'autre pièce 52 et l'autre pièce 56 aient également leurs axes dans un même plan horizontal.

Enfin, la structure représentée sur les figures 1 et 2 comprend également des seconds moyens de guidage 58, encore appelés "lits de jarretière". Chacun des seconds moyens de guidage 58 comprend une plaque 59 allongée reliant horizontalement les différentes plaques 2 et fixée à celles-ci par l'intermédiaire de supports 60, sensiblement au niveau d'une pièce de guidage 48. En correspondance avec chaque plaque 2. deux pièces cylindriques 62 d'axes verticaux sont fixées sur la plaque 59 avec un intervalle entre elles, de telle manière que l'une des pièces 62 soit dans le prolongement du tube 38 correspondant lorsqu'on regarde la plaque de l'avant vers l'arrière. l'autre pièce 62 étant montée à gauche de la pièce 62 précédente (figure 3).

Une fibre optique telle que 34, après être passée de la face droite à la face gauche de la plaque 2, passe entre la plaque 40 et la pièce de guidage 48 puis entre les deux pièces 52 à partir desquelles elles peut passer entre les deux pièces 52 ou les deux pièces 56 immédiatement inférieures ou immédiatement supérieures (s'il en existe). Après être passée entre les deux pièces 52, elle peut également passer entre les pièces 56 du même niveau ou du niveau inférieur ou supérieur (s'il en existe) puis entre les deux pièces 62 correspondant à ces pièces 56, pour continuer son chemin le long de la plaque 59 associée, vers la gauche ou la droite de celle-ci lorsque c'est possible (figu- res 2 et 3).

On va maintenant donner quelques exemples de connexions optiques réalisables à l'aide de la structure représentée sur les figures 1 et 2.

Cette structure repose sur un plancher 64. Une ouverture 66 s'étendant parallèlement à la rangée de plaques 2 est pratiquée dans ce plancher 64 et permet l'arrivée de câbles multiples 68 vers ladite structure. Bien entendu les câbles 68 pourraient arriver par le haut de cette structure. Au niveau de l'ouverture 66, chaque câble multiple 68 est fixé au plancher 64, mis à la terre et épanoui, ou divisé, en les différents câbles simples 16 qui le composent et ces câbles 16 sont revêtus de protections. Selon les connexions optiques que l'on souhaite réaliser, chaque câble 16 est orienté vers une plaque 2 déterminée puis enroulé sur les deux tambours 8 et 10 correspondants en passant d'abord sur le tambour 8 avant de passer sur le tambour 10 et en faisant plusieurs tours lors de cet enroulement de façon à constituer une réserve de câble.

Avant l'enroulement, le câble 16 passe dans un guide 70 fixé sur le support 2 considéré, vers le bas de celui-ci. Ce guide a pour fonction de maintenir la partie du câble 16 émergeant de l'ouverture 66 à proximité du support 2 correspondant et de permettre la tension de ce câble 16 au début de son enroulement.

Le câble 16 ayant fait ainsi plusieurs tours sur les tambours 8 et 10 peut alors aboutir à la tête optique 4 souhaitée.

Le câble 16 s'épanouit alors dans la tête optique 4 et les fibres optiques qui lui correspondent sont raccordées respectivement aux connecteurs de cette tête optique. On peut alors raccorder des fibres optiques de liaison 34 aux différents connecteurs et faire exécuter à chaque fibre optique de liaison un parcours utilisant les divers premiers moyens de guidage de la plaque 2 considérée puis les seconds moyens de guidage appropriés et enfin les premiers moyens de guidage d'une autre plaque 2 portant une autre tête optique 4 à l'un des connecteurs de laquelle on souhaite relier la fibre optique de liaison.

Des exemples de tels parcours sont donnés à titre purement indicatif et nullement limitatif sur la figure 2. Ainsi peut on envisager un parcours 72 dans lequel la fibre de liaison 34, issue d'un boîtier 4 déterminé, contourne le tube 38 correspondant, passe entre les deux pièces 52 associées à ce boîtier 4 puis entre les deux pièces 56 associées au boîtier 4 immédiatement inférieur puis entre les deux pièces 62 correspondantes à partir desquelles elle oblique vers la gauche pour passer entre les deux pièces 62 associées à la plaque située immédiatement à gauche de la précédente puis entre les pièces 56 et 52 correspondantes pour enfin contourner le tube 38 associé à ces pièces et être relié à un connecteur déterminé du boîtier 4 correspondant.

En vue d'étaler dans l'espace le parcours des câbles et des fibres optiques de liaison, en évitant les accumulations, on peut respecter la règle suivante : au départ de la tête optique la plus à gauche (vue de la face avant), chaque fibre de liaison fait d'abord son parcours vertical si nécessaire pour gagner la hauteur de la tête optique à laquelle elle doit aboutir puis son parcours horizontal.

Le rôle des tambours mobiles 12 va maintenant être expliqué : lorsqu'une ou plusieurs fibres optiques d'un câble simple donné $16_1$ sont cassées dans une tête optique $4_1$, le câble $16_1$ est extrait de la tête optique $4_1$ et un tambour mobile $12_1$ est mis en place dans la fente $14_1$ correspondant à la tête optique $4_1$ et l'on fait passer la partie arrière $16_A$ du câble $16_1$ au-dessous du tambour mobile $12_1$ (au lieu de la faire passer au-dessous du tambour inférieur $10_1$ correspondant) puis l'on refait les connexions nécessaires des fibres optiques dans la tête optique $4_1$, en coupant, s'il le faut, une partie de l'extrémité du câble $16_1$, extrémité qui aboutissait au boîtier $4_1$, et l'on déplace enfin le tambour mobile $12_1$ vers le bas jusqu'à obtenir le tension souhaitée pour le câble et l'on immobilise le tambour $12_1$. Un tambour mobile permet donc de réintervenir sur une tête optique en gardant finalement le câble 16 correspondant tendu et sans perdre toute la longueur de ce câble correspondant à une double hauteur de plaque 2.

Sur la figure 1, on aperçoit également une épissure de masse 73 permettant de connecter un câble simple $16_2$ issu d'un câble multiple 68 sortant du plancher 64 à un câble simple $16_3$ descendant vers la structure de l'invention à partir du plafond (non représenté) de la pièce dans laquelle se trouve cette structure. L'épissure de masse 73 est obtenue en mettant bout à bout et en soudant ensuite chaque fibre du câble $16_2$ à une fibre choisie du câble $16_3$. Pour effectuer cette connexion particulière, on place un tambour mobile $12_2$ dans la rainure appropriée, on réalise l'épissure de masse, on fait passer le câble $16_2$ qui descend donc du tambour supérieur correspondant à cette rainure, sous le tambour mobile $12_2$ que l'on déplace ensuite vers le bas pour que les câbles $16_2$ et $16_3$ soient tendus et que l'on immobilise.

Pour certains câbles tels que le câble simple $16_4$ appelé "câble d'installation éclaté" et provenant d'un équipement non représenté du central auquel est associée la structure représentée sur les figures 1 et 2, il peut être nécessaire d'éviter autant que possible les atténuations optiques lors des connexions de ces câbles et donc le nombre de connecteurs optiques utilisés pour ces connexions. A cet effet, on utilise un boîtier auxiliaire 74 appelé "boite d'éclatement" (figures 2 et 4). Cette boîte 74 est fixée, à un niveau approprié, sur la face gauche d'un support 2, de préférence, s'il existe, le support 2 comportant la plus grande partie des connecteurs auxquels les fibres du câble $16_4$ doivent être reliées,

afin de limiter autant que possible le parcours de ces fibres.

Le boîtier auxiliaire 74 est par exemple parallélépipédique et comporte en son intérieur un tambour 76 d'axe horizontal lorsque le boîtier 74 est monté sur son support 2. La boîte 74 comporte un orifice 78 pour l'entrée du câble $16_4$ ainsi qu'un dispositif 80 permettant la pénétration et le blocage du câble dans le boîtier 74. Après pénétration dans ce boîtier, le câble est épanoui en fibres optiques qui sont enroulées plusieurs fois sur le tambour 76 constituant ainsi une réserve de fibres optiques, ce tambour ayant un rayon suffisamment grand pour ne pas endommager les fibres optiques qui sont enroulées sur lui. Le boîtier 74 comporte également trois orifices 82, 84, 86 permettant la sortie des fibres après leur enroulement sur le tambour. Les orifices 78, 82, 84, 86 sont par exemple disposés aux quatre coins de la boîte 74.

Comme on le voit sur la figure 2, la boîte 74 est fixée sur la face gauche du support 2 choisi, par exemple à la place d'une pièce 52 supérieure. Chaque support 2 est pourvu d'une rangée verticale d'ouvertures allongées 88, ladite rangée passant entre la ligne définie par les pièces 52 et la ligne définie par les pièces 56 du support. Ceci permet d'enrouler le câble $16_4$ sur les tambours inférieur et supérieur du support 2 correspondant afin de constituer une réserve de câble puis de faire passer celui-ci par l'ouverture 88 la plus proche de la boîte 74 avant de le faire aboutir à cette boîte. A leur sortie de la boîte 74 par les orifices prévus à cet effet, les fibres telles que $26_1$, $26_2$ et $26_3$ du câble $16_4$ peuvent être envoyées vers les boîtiers choisis pour leur connexion, par l'intermédiaire des moyens de guidage appropriés. On voit sur les figures 2 et 4 que la boîte 74 est fixée sur la face gauche du support 2 de façon que l'orifice 78 correspondant au câble $16_4$ soit tourné vers le haut et vers l'arrière du support 2, ce qui permet d'envoyer les fibres optiques du câble $16_4$ vers la tête optique située au même niveau que le boîtier 74 ou vers les premiers moyens de guidage 50 correspondant aux tête optiques adjacentes à la précédente.

On voit donc que grâce au boîtier auxiliaire 74, la connexion d'une fibre du câble $16_4$ est réalisée en utilisant un seul connecteur alors qu'il en aurait fallu deux si l'on avait fait aboutir le câble $16_4$ à une tête optique et utilisé des fibres optiques de liaison comme on l'a vu plus haut.

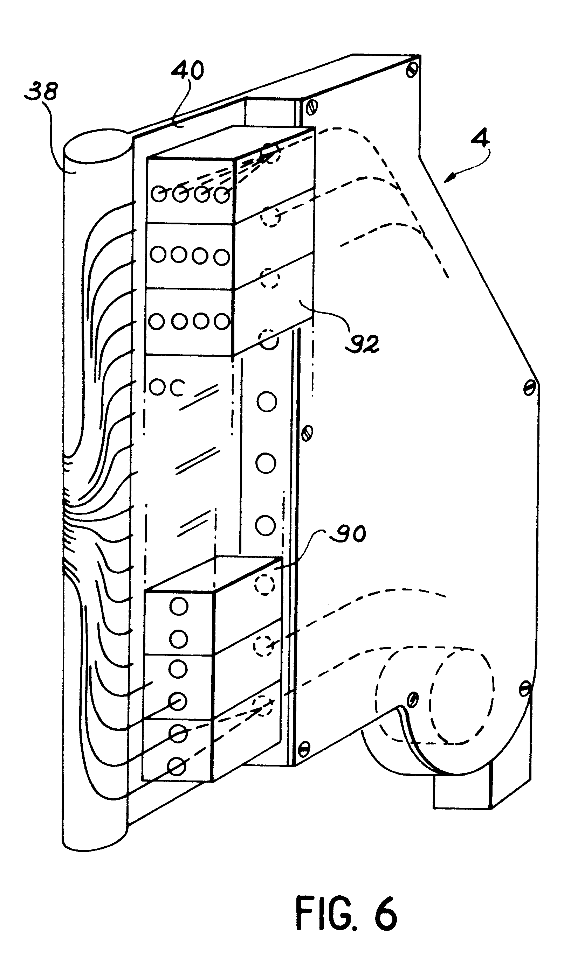

Sur la figure 6, on a représenté une tête optique 4 munie de plusieurs multiplexeurs en longueur d'onde 90, 92 qui sont rendus solidaires de la tête optique par l'intermédiaire des glissières mentionnées plus haut. Ces multiplexeurs sont utilisés lorsque l'on veut séparer des signaux de longueurs d'onde différentes, transmis par une ou plusieurs fibres optiques du câble aboutissant à la tête optique. Le ou les multiplexeurs appropriés sont alors montés en regard du ou des connecteurs de la tête, qui correspond(ent) à cette ou ces fibres.

Par exemple, pour une fibre transmettant des signaux de longueurs d'onde respectives $\lambda_1$ et $\lambda_2$ on monte en regard du connecteur correspondant un multi plexeur tel que 90, ayant une entrée reliée optiquement audit connecteur et deux sorties auxquelles on peut respectivement relier deux fibres optiques de liaison ou deux fibres issues d'un boîtier auxiliaire, qui transmettent alors respectivement un faisceau lumineux de longueurs d'onde $\lambda_1$ et un faisceau lumineux de longueur d'onde $\lambda_2$.

Pour une autre fibre transmettant des faisceaux lumineux de longueurs d'onde respectives $\lambda_1$, $\lambda_2$, $\lambda_3$ et $\lambda_4$, on monte en regard du connecteur correspondant un multiplexeur tel que 92, ayant une entrée reliée optiquement audit connecteur et quatre sorties auxquelles on peut respectivement connecter des fibres optiques de liaison ou des fibres issues d'un boîtier auxiliaire, ces fibres transportant alors des faisceaux lumineux de longueurs d'onde respectives $\lambda_1$,; $gl_2$, $\lambda_3$ et $\lambda_4$.

On voit sur la figure 3 que les fibres issues d'un multiplexeur peuvent bien entendu prendre des directions différentes sur les seconds moyens de guidage 58. De plus, on prévoit de préférence en regard de chaque connecteur, un nombre de rainures 44 égal au nombre maximum de sorties des multiplexeurs susceptibles d'être installés sur les têtes optiques.

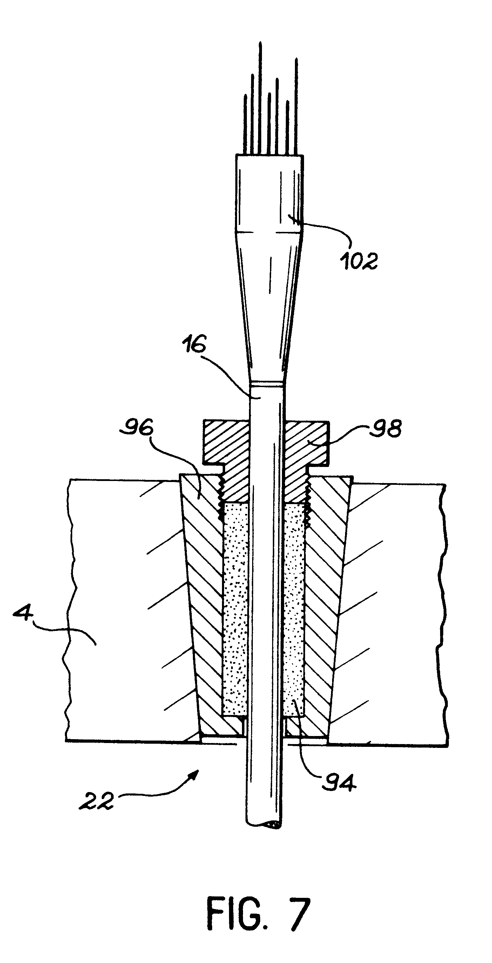

Sur les figures 5 et 7, on a représenté le dispositif 22 qui permet la pénétration et le blocage d'un câble dans une tête optique. Ce dispositif comprend un cylindre déformable 94 placé dans un cône presse-étoupe 96 qui est placé dans un logement prévu à cet effet dans la tête optique au niveau de l'ouverture 20. Le câble 16 traverse le cylindre 94 ainsi qu'une vis 98 qu'il suffit de visser dans le cône presse-étoupe fileté à cet effet pour appuyer sur le cylindre 94 qui immobilise alors le câble par rapport au cône presse-étoupe et donc par rapport à la tête optique, une pièce 100, dans laquelle est prévue un logement complémentaire de celui qui est pratiqué dans la tête optique, venant alors refermer l'ouverture 20 (figure 5). Ce dispositif est avantageux en ce qu'il permet l'extraction du câble sans avoir à séparer la tête de son support.

Un dispositif comparable peut être utilisé pour le maintien en position d'un câble simple par rapport à un boîtier auxiliaire.

On voit également sur la figure 7 un dispositif 102 prévu pour l'épanouissement des fibres optiques de la tête optique. Ce dispositif comprend de façon connue des tubes en nombre égal aux fibres et à travers lesquels passent ces fibres.

Bien entendu, la structure objet de l'invention pourrait comporter plusieurs rangées parallèles de supports 2 au lieu d'une seule rangée. On pourrait alors prévoir dans le couloir séparant deux rangées adjacentes une échelle mobile sur des rails, permettant à un utilisateur de se placer à côté d'un support déterminé et au niveau d'une tête optique déterminée pour y faire les connexions optiques qu'il souhaite.

A titre purement indicatif et nullement limitatif, on peut concevoir une structure comportant trente supports séparés les uns des autres par des intervalles de 25 cm et comportant chacun une dizaines de têtes optiques associées chacune à dix fibres optiques, ce qui permet de connecter optiquement un total d'environ 3000 fibres optiques.

La structure objet de l'invention,qui joue le rôle d'un "répartiteur optique", a l'avantage de permettre des interventions fréquentes des utilisateurs tout en assurant une protection suffisante aux fibres optiques qu'elle comporte vis-à-vis des allées et venues de ces utilisateurs.

## Revendications

1. Structure pour connexions optiques, caractérisée en ce qu'elle comprend :
- des supports (2) de forme allongée, sensiblement parallèles, chaque support portant, sur une face, d'un côté, une rangée de boîtiers de connexion optique (4), qui s'étend suivant la longueur du support, chaque boîtier étant pourvu d'une pluralité de moyens (28) de connexion optique destinés à relier des fibres optiques et situés dudit côté, et, sur l'autre face, au niveau de chaque boîtier, des premiers moyens de guidage (50) de fibres optiques de liaison (34) destinées à relier optiquement les moyens de connexion entre eux, et
- des seconds moyens de guidage (58) de ces fibres de liaison, reliant les supports, placés au voisinage de l'autre côté de ceux-ci et en regard des boîtiers de même niveau dans ces supports,
les premiers moyens de guidage étant prévus pour permettre aux fibres de liaison de parcourir les supports sensiblement longitudinalement et transversalement, à partir de boîtiers de ces supports, pour aller jusqu'à des boîtiers de supports différents par l'intermédiaire des seconds moyens de guidage.

2. Structure selon la revendication 1, caractérisée en ce que chaque boîtier (4) est destiné à l'épanouissement de fibres optiques (26) d'un câble optique (16) aboutissant à ce boîtier et comprend un orifice (20) pour l'entrée du câble et au moins un tambour (24) ayant un rayon qui permet l'enroulement des fibres du câble.

3. Structure selon la revendication 2, caractérisée en ce que chaque support (2) comprend en outre sur la face portant les boîtiers (4) et du côté opposé à ceux-ci, une rangée de tambours de réception (8, 10, 12) s'étendant parallèlement à la rangée de boîtiers et destinés à recevoir les câbles (16), certains (12) de ces tambours étant déplaçables parallèlement à la rangée de boîtiers.

4. Structure selon l'une quelconque des revendications 1 à 3, caractérisée en ce que chaque support (2) comprend en outre des moyens (36) de renvoi des fibres de liaison (34) d'une face à l'autre du support, ces moyens de renvoi étant situés au voisinage des moyens de connexion optique (28) et ayant une courbure compatible avec le diamètre des fibres de liaison.

5. Structure selon la revendication 4, caractérisée en ce que les moyens (36) de renvoi comportent des rainures (44) destinées à guider les fibres de liaison (34) lorsqu'elles passent d'une face à l'autre du support (2).

6. Structure selon l'une quelconque des revendications 1 à 5, caractérisée en ce qu'elle comprend en outre au moins un boîtier auxiliaire (74) fixé sur un support (2), sur ladite autre face de celui-ci et au niveau d'un boîtier de connexion (4), chaque boîtier auxiliaire étant destiné à l'épanouissement de fibres optiques d'un autre câble optique (16$_4$) aboutissant à ce boîtier auxiliaire, et comportant un orifice (78) pour l'entrée de l'autre câble, un tambour (76) ayant un rayon qui permet l'enroulement des fibres optiques de l'autre câble, et des ouvertures (82, 84, 86) prévues pour la sortie de ces fibres respectivement en direction du boîtier de connexion et des premiers moyens de guidage (50) correspondant aux autres boîtiers de connexion adjacents audit boîtier de connexion.

7. Structure selon la revendication 6, caractérisée en ce que le support (4) est percé d'une ouver ture (88) au voisinage du boîtier auxiliaire (74), cette ouverture permettant le passage de l'autre câble optique (16$_4$).

8. Structure selon l'une quelconque des revendications 1 à 7, caractérisée en ce qu'elle comprend en outre au moins un moyen (90, 92) de multiplexage en longueur d'onde, ayant une entrée optiquement couplée à un moyen de connexion optique (28) d'un boîtier de connexion (4) et plusieurs sorties destinées à être optiquement couplées à des fibres optiques.

FIG. 1

FIG. 2

FIG. 3

FIG. 4

FIG. 5

0220969

FIG. 6

FIG. 7

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | EP-A-0 149 250 (W. SEDLBAUER) * Page 5, ligne 9 - page 7, ligne 22; figure 1 * | 1,6 | G 02 B 6/44 |
| | --- | | |
| A | FR-A-2 517 076 (C.T.M.) * Page 2, ligne 25 - page 3, ligne 16; figure 1 * | 6 | |
| | --- | | |
| A | FR-A-2 515 466 (L.T.T.) * Revendications * | 1 | |
| | --- | | |
| A | EP-A-0 055 231 (TELEFON AB L.M. ERICSSON) | | |
| | --- | | DOMAINES TECHNIQUES RECHERCHES (Int Cl.4) |
| Y,P | WO-A-8 504 960 (A.T.T.C.) * Revendications; figures * | 1 | |
| | --- | | |
| Y,P | FR-A-2 566 756 (C.I.T. - ALCATEL) * Revendications; figures * | 1 | G 02 B |
| | ----- | | |

Le present rapport de recherche a été établi pour toutes les revendications

| Lieu de la recherche | Date d'achèvement de la recherche | Examinateur |
|---|---|---|
| LA HAYE | 06-01-1987 | PFAHLER R. |